# EUROPEAN PATENT APPLICATION

(11) **EP 1 596 091 A1**
(43) Date of publication of application: **16.11.2005**
(21) Application number: 05252974.0
(22) Date of filing: 13.05.2005
(51) Int. Cl.: F16D 65/14

(54) **A manual brake application assembly**

(30) Priority: 14.05.2004 GB 0410844
(71) Applicant: Meritor Heavy Vehicle Braking Systems (UK) Limited, Cwmbran, Gwent NP44 3XU (GB)
(72) Inventor: Royston, Leonard Morris, Newport NP10 0DN (GB)
(74) Representative: Jones, John Bryn

(57) **Abstract**

A manual brake application assembly for air actuated brakes the assembly comprising a threaded support (90, 190) secured relative to a brake (8) and a complementary threaded rod (94, 194) for adjustable positioning relative to a component (11, 14) in an actuation transmission path of the brake, such that screwing in of the threaded rod actuates and applies the brake.

## Description

The present invention relates to a manual brake application assembly. More particularly, the present application relates to a manual brake application assembly for air actuated brakes that may be used when there is a malfunction in the air actuation system, or no air actuator is present.

Air actuated disc brakes are typically used in heavy vehicle applications, such as for the braking of trucks or buses. Such brakes typically operate as follow:

Pressurised air is introduced behind a diaphragm of an air chamber, which generates a load in a push rod. The push rod in turn applies a force to a pivotably mounted operating shaft causing it to rotate. By means of an eccentric action, an amplified force is applied to one or more tappet assemblies that advance a brake pad towards a brake rotor, causing a clamping effect on the brake rotor. This retards rotation of the rotor due to friction generated between the pad in contact with the tappet, and a further brake pad mounted on the opposite face of the rotor.

To comply with safety legislation, when a vehicle fitted with air actuated brakes is parked, the brakes must be applied mechanically without reliance on the pressurised air, in order to overcome the risk of the brake force being removed due to leakage of the air, with obvious consequences. Conventionally, in air actuated brakes of the type described above, this parking brake function is achieved by the addition of a large spring to the rear chamber to generate a load on the push rod when no pressurised air is present.

In a co-pending patent applications that claim priority from UK application GB 0410841.1, the applicant has proposed using a mechanical latch which engages with a surface on the operating shaft when in an actuated position, as an alternative to the use of a conventional spring-type parking brake. In order for the power requirement for the operation of this latch type parking brake to be minimised, the service brake is applied before the latch can be brought into and out of contact with the op-shaft to apply and release the parking brake.

In normal circumstances a brake control system ensures that the service brake is applied as needed for the operation of the parking brake. However, if there is insufficient pressure for the service brake to be applied due to a malfunction, for example, this would not be possible. Similarly, during assembly or maintenance of the brake, it may have no air chamber fitted with which to apply the required force for operation of the service brake.

An object of the present invention is to provide an assembly that enables the service brake to be manually applied, without the requirement for pressurised air.

Accordingly, a first aspect of the present invention provides a manual brake application assembly for air actuated brakes, the assembly comprising a threaded support secured relative to a brake and a complementary threaded rod for adjustable positioning relative to a component in an actuation transmission path of the brake, such that screwing in of the threaded rod actuates and applies the brake.

A second aspect of the present invention provides a method of operating a manual brake application assembly for air actuated brakes comprising a threaded support secured relative to a brake and a complementary threaded rod for adjustable positioning relative to a component in an actuation transmission path of the brake such that screwing in of the threaded rod actuates and applies the brake, the method having the step of screwing the threaded rod into the threaded support until the brake is applied.

Embodiments of the present invention will now be described, by way of example only, with reference to the accompanying drawings, in which:
FIG. 1 is a vertical cross-section through a disc brake adapted for use with an assembly according to one embodiment of the present invention;
FIG. 2 illustrates the latch parking brake in more detail;
FIGS. 3 & 4 are partial cut away views of an air chamber incorporating an assembly according to one embodiment of the present invention; and
FIG. 5 illustrates an assembly according to a second embodiment of the present invention.

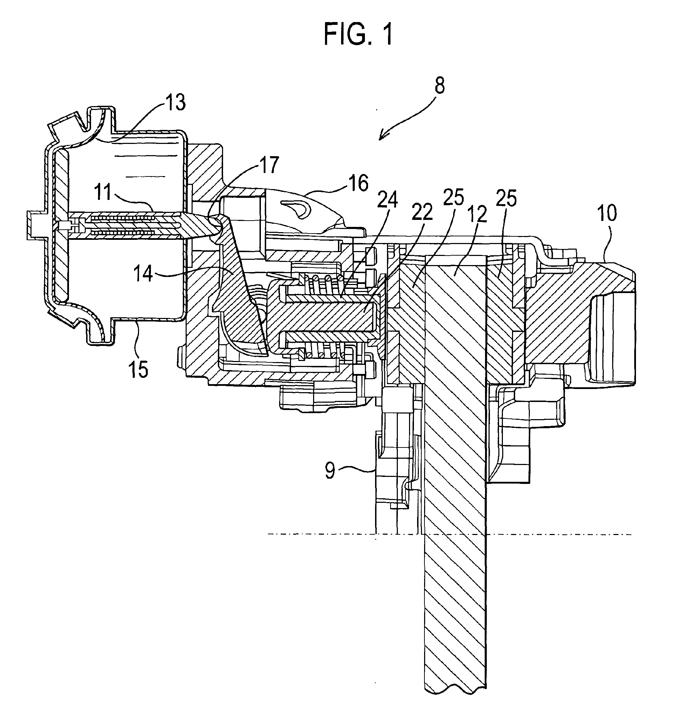

Referring to Fig. 1, brake 8 is of the type comprising a carrier 9 that is non-rotatably secured to a vehicle axle or suspension, which has a caliper 10 sidably mounted thereon. The caliper 10 straddles a disc or rotor 12 that is mounted for rotation together with a vehicle wheel to be braked (not shown). The brake 8 is actuated by the introduction of pressurised air behind a diaphragm 13 connected to a push rod 11. The push rod co-operates with a socket 17 in the radially outer end of an operating shaft or "op-shaft" 14 of the brake. The inner end of the op-shaft 14 has at its opposite ends arcuate bearing surfaces 42 seated in bearing seats 43 arranged at the lower end of an inner housing part 16 of the caliper to permit the op-shaft 14 to rotate about an axis that extends into the paper in Fig. 1. The inner end of the op-shaft 14 is provided with pockets positioned eccentric to the op-shaft axis of rotation which, upon rotation, cause a force to be transmitted to rollers 20. The rollers 20 in turn transmit an applied load to a pair of inner tappet members 22. These inner tappet members 22 are screwed into engagement with associated outer tappet members 24 which apply the load from the actuator to the rear of inner brake pad 25, thus pressing the friction material of the brake pad into friction engagement with the rotor 12.

A reaction force is generated through this frictional engagement between the rotor and the inner brake pad 25, that is fed back through the tappets 22 and 24, rollers 20 and op-shaft 14, that is supported by the inner housing part 16. Since the caliper 10 is slidably mounted relative to rotor 12, and straddles the rotor, the applied force generated by movement of the op-shaft 14 is ultimately transmitted by reaction to a further brake pad 25 mounted on the opposite side of rotor 12, which is also pressed into frictional engagement with the rotor. Therefore, the rotor 12, upon movement of the op-shaft 14, is clamped between the inner and outer brake pads 25 to generate a braking force for braking the vehicle under control of the applied input movement from diaphragm 13 and push rod 11. The diaphragm 13, push rod 11, op-shaft 14, rollers 20 inner tappet members 22 and outer tappet members 24 constitute an actuation transmission path of the brake 8.

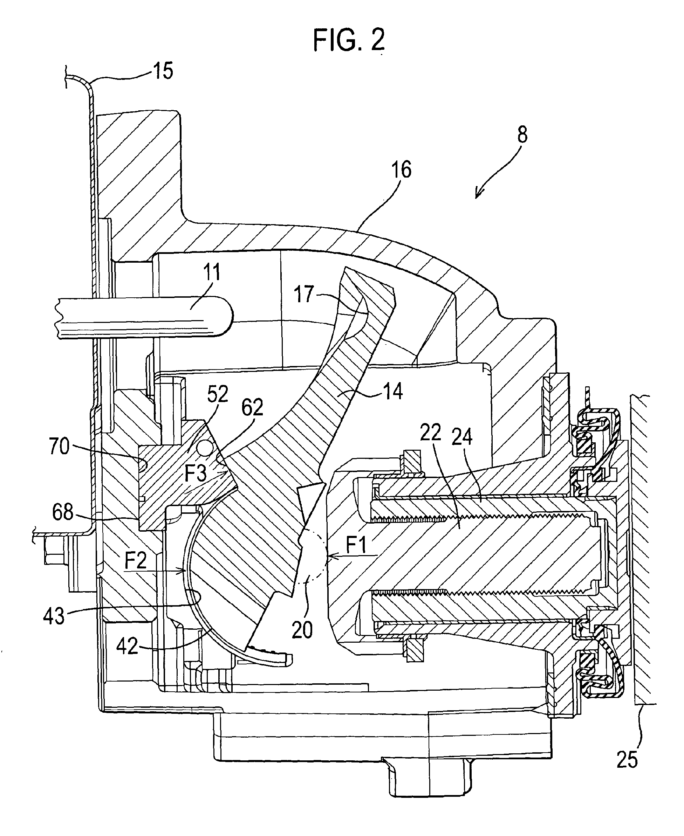

Fig. 2 illustrates a latch 52 that is in contact with a helical surface on the rear of op-shaft 14 to provide a parking brake function of the brake 8. The latch 52 is drivable into and out of the paper of Fig. 2 by an electric motor (not shown) in order to engage and disengage the parking brake. To minimise cost and space requirements, the power output of this motor is relatively low. This means that the parking brake may only be applied and removed when the service brake is applied via push rod 11, so that the motor does not have to overcome a high degree of friction between the latch 52 and abutment surface 62.

This in turn means that if there were a failure in the service brake whilst the parking brake is applied, the vehicle to which the brake is fitted is effectively immobilised and cannot be towed away for example. Similarly, if the parking brake is applied when a vehicle is being serviced, when the air chamber is removed, the service personnel have no means of releasing the parking brake in order to, for example, change the brake rotor.

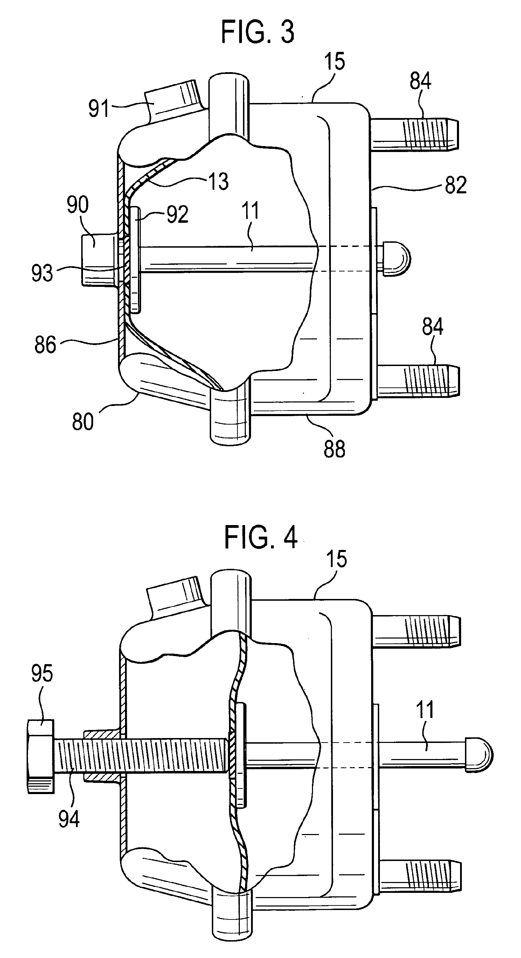

Referring now to Figs. 3 and 4, an air chamber incorporating assembly according to one embodiment of the present invention is shown in more detail. It can be seen that the chamber comprises a housing 80 having a front wall 82 arranged to be brought into face-to-face contact with the inboard rear face of caliper 10 and be attached thereto by bolts 84. The front wall 82 is provided with a hole (not visible) to enable push rod 11 to protrude therethrough and move between the positions shown in Figs. 3 and 4.

The air chamber further comprises a rear wall 86 that is spaced from the front portion 82 by a generally cylindrical side wall 88. The rear wall 86 is provided with an internally threaded port 90 axially in alignment with push rod 11, which in normal circumstances may be connected to an air supply line from a vehicle air compressor and valve arrangement that supplies the pressurised air to the region behind diaphragm 13, to actuate push rod 11 and apply the brake and permits release of the air. Alternatively, the port 90 may be used as a pressure test port for diagnostics and the like. The side wall 88 is provided with a further port 91 that may also act either as an air inlet/outlet port, or a diagnostic port.

In the interior of the air chamber, it can be seen that the push rod 11 terminates at its end nearest the rear housing portion 86 in a circular pressure plate 92 that functions to minimise the stresses applied to the diaphragm 13 when the pressurised air is introduced. A toughened diaphragm insert 93 is provided on the pressure plate 92 axially in line with push rod 11 and inlet port 90. The insert 93 inhibits damage being caused to the diaphragm 13 due to the introduction of the threaded rod shown in Fig. 4 and discussed below, and may be made from any suitable material having sufficient bearing strength to withstand the load caused by the introduction of the rod to apply the brake. Examples of suitable material include plastics or ceramics. The insert is moulded integrally with the diaphragm 13 to form an airtight seal, or in other embodiments could be integral with the plate and provide a groove into which the diaphragm locates to give an air tight seal. In a further variant, the insert 13 may be attached separately to the plate 92, trapping the diaphragm 13 therebetween to form an air tight seal.

Referring to Fig. 4 it can be seen that a threaded rod 94 has been introduced through port 90 and screwed into contact with insert 93 of pressure plate 92. The rod preferably comprises a hexagonal or other shaped head portion 95 to enable a standard spanner or wrench to be attached thereto, so that torque can be applied to rotate the rod 94 and thereby apply the brake. In other embodiments, such a head may be replaced by an integral arm arranged transverse the longitudinal axis of the threaded rod 94 so that no additional tools are required. A suitable torque limiting device may also be provided in the head to prevent damage being caused to the brake due to excessive loads being applied via the rod 94.

In certain embodiments, the tip of the rod in contact with the insert 93 may be provided with a low friction coating and/or a softer material than the remainder of the rod in order to further reduce the risk of damage being caused to the insert 93 and/or pressure plate 92, or to provide a replacement for insert 93.

When not required, the rod 94 may be stored in association with the air chamber 15 so that it is readily available should the need arise. In certain embodiments, if port 90 is not used as an air feed port, the rod 94 may be permanently screwed into the port in a retracted position, so that it is almost immediately available for use. In order to protect it from damage due to corrosion or the like, a removable cap may be placed over the rod until it needs to be used.

### Operation of the assembly is as follows:

If not already fitted to the port 90, the threaded rod 94 is screwed into the port and turned until the push rod 11 actuates the op-shaft 14. The threaded rod 94 is turned so as to apply the brake to a sufficient extent that the frictional resistance preventing the disengagement of parking brake latch 52 has reduced. The motor is then back-driven to release the parking brake latch. Should re-application of the parking brake be required, the assembly is re-used to apply the service brake, the motor is driven to re-apply the latch 52, and threaded rod 94 then is retracted.

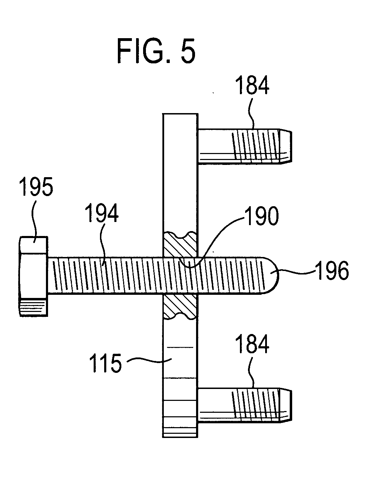

Turning to Fig. 5 an alternative embodiment of the present invention is illustrated. This embodiment provides a tool for the application of the service brake when the air chamber 15 is detached from the caliper 10. Such a tool may be required during the assembly or servicing of the brake when no air chamber is readily to hand. The assembly comprises a cross member 115 with a pair of threaded bolts 184 mounted thereto with a mutual spacing that is configured to match threaded bores on the rear face of the caliper 10 that are usually used to mount the air chamber. In a preferred embodiment, the bolts 184 may be mounted so as to enable the spacing to be adjusted, for example, by providing the bolts 184 in slotted apertures on the cross member 115. This would enable the assembly to fit a variety of different caliper models. Additionally, the cross member 115 may be configured to enable a variety of bolts having differing diameters and thread types to be attached thereto, to enable the assembly to be used with a even wider variety of calipers.

The cross member 115 is provided with a threaded bore 190 at an appropriate location intermediate the bolts 184 to enable a threaded rod 194 to be fitted therethrough. As in the previous embodiment, the rod 194 has a head 195 so that spanners and wrenches may be fitted thereto, but in other embodiments may have a permanent handle secured in the same location instead. The rod 194 may be fitted with a torque limiting device. The opposite end of the rod 196 is shaped so as to complement the socket 17 at the radially outermost end of the op-shaft 14, in much the same way as the push rod 11 that it replaces would do. In this embodiment, it can be seen that end 196 is rounded so as to fit into the socket. In other embodiments, the threaded bore 190 is able to pivot to a limited degree (e.g. by being provided in a non-rotatable ball joint on the cross-member 115) in order to permit the end of the threaded rod to follow the arc described by the op-shaft socket 17, as it moves to apply the brake.

To use the assembly, bolts 184 are first screwed into the corresponding holes on the rear face of caliper 10 after any required alignment adjustments are made. A suitable spanner or wrench is then fitted to head 195 of threaded rod 194 and this is turned until the op-shaft 14 has been actuated to a sufficient extent that the parking brake latch 52 may be released or applied. Rod 194 is then retracted and the bolts 184 unscrewed in order to remove the assembly.

It should be noted that terms such as "inner", "outer", "upper" and "lower" are used herein for ease of reference and should not be regarded as limiting. In the context of this application, the term "manual" should be understood to mean an assembly that is that does not form part of the normal means provided in the brake for service or parking braking, but rather an assembly only used in during brake assembly, maintenance or emergency situations. Although the term "manual" has been used, this does not preclude an assembly that is attachable to a power tool or is provided with its own power source falling within the scope of the present invention.

It will be appreciated that a variety of changes may be made within the scope of the present invention. For example, suitable assemblies may be used on air chambers mounted at 90° to the position illustrated in Fig. 1, for example above or at the side of the caliper. If the air chamber has no suitably located inlet port, a threaded bore may be provided solely for the purpose of use with the threaded rod. This bore may be provided with a cap to close it off when not in use. The present invention may also be used on other types of air-actuated disc brakes, such as fixed-caliper brakes, for example.

## Claims

1. A manual brake application assembly for air actuated brakes the assembly comprising a threaded support (90, 190) secured relative to a brake (8) and a complementary threaded rod (94, 194) for adjustable positioning relative to a component (11, 14) in an actuation transmission path of the brake, such that screwing in of the threaded rod actuates and applies the brake.

2. A manual brake application assembly according to claim 1 wherein the threaded support (90) is provided on an air chamber (15) of the brake.

3. A manual brake application assembly according to claim 2 wherein the threaded support is provided on a rear face (86) of the air chamber.

4. A manual brake application assembly according to claim 2 or claim 3 wherein the threaded support normally functions as an air inlet/outlet port or a diagnostic port.

5. A manual brake application assembly according to any preceding claim wherein the support is positioned such that when received therein, the threaded rod is substantially axially aligned with a push rod of the transmission path.

6. A manual brake application assembly according to Claim 1 wherein the threaded support (190) is provided on a frame (115) configured to be releasably securable to the brake.

7. A manual brake application assembly according to claim 6 wherein the frame is configured to be releasably securable to mounting means provided for the air chamber on the brake.

8. A manual brake application assembly according to claim 7 wherein the frame is provided with two or more bolts (184) configured to screw into the air chamber mounting means.

9. A manual brake application assembly according to claim 8 wherein the frame comprises a cross-member (115) extending between the bolts (184) and provided with the threaded support (190).

10. A manual brake application assembly according to claim 6 to 9 wherein the threaded support is positioned such that when received therein, the rod may engage a push rod socket (17) of an op-shaft (14) of the transmission path of the brake.

11. A manual brake application assembly according to any preceding claim wherein the threaded rod has a first end (196) shaped to complement its point of contact with the component (11, 14) of the transmission path.

12. A manual brake application assembly according to any preceding claim wherein the threaded rod has a second end (95, 195) provided with a formation for the attachment of a spanner or the like.

13. A manual brake application assembly according to claims 1-5, 11 or 12 wherein the component of the transmission path is provided with strengthening insert (93) to be contacted by the rod.

14. An air chamber, brake caliper or brake incorporating an assembly according to any preceding claim.

15. A method of operating an assembly according to any preceding claim comprising the step of screwing the threaded rod into the threaded support until the brake is applied.
